# EUROPÄISCHE PATENTANMELDUNG

(11) **EP 0 732 563 A1**
(43) Veröffentlichungstag der Anmeldung: **18.09.1996**
(21) Anmeldenummer: 96102051.8
(22) Anmeldetag: 13.02.1996
(51) Int. Cl.: G01B 7/34, G01B 7/004, G01B 21/04

(54) **Koordinatenmessgerät mit einer Einrichtung für die Rauheitsmessung**

(30) Priorität: 11.03.1995 DE 19508861
(71) Anmelder: Carl Zeiss, D-89518 Heidenheim (Brenz) (DE); CARL-ZEISS-STIFTUNG, HANDELND ALS CARL ZEISS, D-89518 Heidenheim (Brenz) (DE)
(72) Erfinder: Herklotz, Henrik, D-12051 Berlin (DE); Arndt, Thomas, D-12249 Berlin (DE); Ohnheiser, Rainer, Dr., D-73111 Lauterstein 2 (DE); Schepperle, Karl, D-73447 Oberkochen (DE)

(57) **Zusammenfassung**

Für Rauheitsmessungen wird anstelle des sonst für Koordinatenmessungen verwendeten Taststifts mit Tastkugel ein passiver Rauheitstaster (118) mit einer Tastspitze (119) an den messenden Tastkopf des Koordinatenmeßgerätes eingewechselt. Die Generierung der Meßpunkte erfolgt dabei unter Benutzung der bereits vorhandenen Meßwertgeber (23) im Tastkopf des KMG. Aus der gespeicherten quasianalogen Meßpunktfolge werden mit Hilfe eines entsprechenden Softwaremoduls die gewünschten Oberflächenkenngrößen berechnet.

## Beschreibung

Die geometrischen Abmessungen von Werkstücken werden heute überwiegend mit Hilfe von Koordinatenmeßgeräten ermittelt. Das sind Instrumente, bei denen ein sogenannter Tastkopf mit einer an einem nachgiebig gelagerten Stift befestigten Tastkugel über drei orthogonale Führungen und diesen zugeordneten Antrieben in einem Meßvolumen von typisch 1m³ verfahren werden kann. Die Koordinatenmeßgeräte lassen sich einteilen in solche mit einem "schaltenden" Tastkopf, der bei Berührung mit dem Werkstück ein impulsförmiges Triggersignal erzeugt, mit dem also nur Einzelpunktmessungen möglich sind, und solche mit einem "messenden" Tastkopf, wie er in der DE-PS 22 42 355 sowie in der noch unveröffentlichten Anmeldung P 44 24 225.5 der Anmelderin beschrieben ist. Koordinatenmeßgeräte mit einem solchen "messenden" Tastkopf sind in der Lage, neben Maß- und Lagebestimmungenn an Werkstücken auch Formmessungen durchzuführen, indem die in drei Freiheitsgraden nachgiebig gelagerte Tastkugel des Tastkopfs in ständigem Kontakt mit der Werkstückoberfläche an dieser entlang geführt wird, so daß die während der Abtastbewegung im Maschinentakt übernommene Meßpunktfolge aufgezeichnet und graphisch als quasianaloger Formplott ausgegeben wird.

Zur Bestimmung von Gestaltsabweichungen höherer Ordnung wie Welligkeit und Rauheit an Werkstücken wurden jedoch bisher stets separate Tastschnittgeräte eingesetzt. Bei diesen Geräten werden überwiegend taktile elektromechanische Tastersysteme mit einem eindimensional auslenkbaren Meßtaster sowie einer daran befestigten Diamantspitze verwendet. Diese Diamantspitze wird nach entsprechender Ausrichtung mit geringer Meßkraft von einer Vorschubeinrichtung über die betreffende Werkstückoberfläche geführt. Durch die Auslenkung des Meßtasters wird im Meßsystem ein proportionales Meßsignal erzeugt. Solche Oberflächentaster sind beispielsweise von der Firma Feinprüf Perthen GmbH in Göttingen unter der Bezeichnung "Perthometer" zu beziehen und in deren Katalog "Perthometer, Meßplatzzubehör für Oberflächenmeß- und Registriergeräte" Druckvermerk 3752755 - 01.08.92 beschrieben. Bezüglich der mit solchen Geräten festzustellenden Kenngrößen von Oberflächen wird auf die entsprechenden Normen u.a. DIN 4762 = ISO 4287/1, DIN 4768 und DIN 4772 verwiesen.

Um die komplette Gestalt einer Werkstückoberfläche zu erfassen, wurden somit bisher unterschiedliche Meßgeräte, nämlich Koordinatenmeßgeräte für Maß, Lage und Form und Tastschnittgeräte für die Messung von Rauheit und Welligkeit eingesetzt. Das erfordert einen hohen Aufwand, nicht nur bedingt durch die Anschaffung dieser Geräte selbst, sondern auch durch den Zeitverlust, der durch das Umspannen und Einrichten für die Messung auf den unterschiedlichen Meßgeräten entsteht.

Es ist bereits vorgeschlagen worden, diesen Aufwand zu verringern, indem Tastschnittgeräte direkt an den Tastkopf eines Koordinatenmeßgerätes angesetzt wurden. Beispielsweise ist in QZ 35 (1990), Band 12, Seite 713 - 715 ein Koordinatenmeßgerät mit einem schaltenden Tastkopf beschrieben, in den statt des üblichen starren Taststiftes mit Tastkugel ein komplettes Tastschnittgerät mit einem aktiven elektromechanischen Kufentastsystem einschließlich der zugehörigen Vorschubeinheit eingewechselt ist. Die Stromversorgung für die Vorschubeinheit und die Weiterleitung der Meßsignale des Tastschnittgerätes sind über Kontakte an der Wechselstelle des Tastkopfs geführt. Bei dieser Lösung dient das Koordinatenmeßgerät lediglich dazu, das Tastschnittgerät an der zu prüfenden Stelle zu positionieren. Die Rauheitsmessung wird dann mit Hilfe des eingewechselten Tastschnittgeräts durchgeführt.

Will man mit einem solchen System in einem automatischen Ablauf beispielsweise einen Motorblock auf Oberflächenrauheit prüfen, sind mehrere, z.B. bis zu sieben unterschiedlich ausgerichtete Tastschnittgeräte erforderlich, um die Werkstückoberfläche an verschiedenen Meßorten abzutasten, oder das Tastschnittgerät ist manuell mehrfach neu auszurichten. Beides ist relativ aufwendig.

In der japanischen Patentanmeldung mit der Veröffentlichungsnummer JP 63-289410 ist ein Koordinatenmeßgerät beschrieben, bei dem der für die Koordinatenmessungen benutzte Tastkopf gegen einen speziellen, ebenfalls aktiven elektromechanischen Rauheitsmeßtaster auswechselbar ist. Dieser Rauheitsmeßtaster besitzt keine eigene Vorschubeinheit sondern wird von den Antrieben des Koordinatenmeßgerätes über die zu prüfende Oberfläche geführt. Nachteilig hierbei ist, daß der Tastkopf ausgewechselt werden muß, was bei messenden Tastköpfen der eingangs beschriebenen Art nicht nur wegen der vielen dann aufzutrennenden elektrischen Verbindungen problematisch ist. Auch dieses bekannte System erfordert mehrere verschieden ausgerichtete Tastschnittgeräte, wenn komplexere Teile automatisch in einer Aufspannung gemessen werden sollen.

In der Firmenschrift "Maßstäbe" der Leitz Meßtechnik GmbH, Druckvermerk Oktober 1994, ist auf Seite 7 ein Rauheitssensor angekündigt, der anstelle des Taststifts automatisch in die entsprechende Aufnahme am Tastkopf eines Koordinatenmeßgeräts eingesetzt werden kann. Der Rauheitssensor ist wiederum ein aktives elektromechanisches Kufentastsystem und wird wie in QZ 35 (1990) Band 12 auf den Seiten 713-715 beschrieben in einen schaltenden Tastkopf eingewechselt. Lediglich die Vorschubeinheit des Tastschnittgeräts entfällt, der Vorschub wird durch die Antriebe des Koordinatenmeßgeräts realisiert.

Bei den bekannten zum Stand der Technik genannten Meßeinrichtungen werden die Oberflächenkenngrößen bzw. Rauheitskennwerte entweder in einer separaten Auswerteeinheit, einem gesonderten Meßrechner oder mit einer speziellen für Rauheitsmeßgeräte angebotenen Software ausgewertet und können allenfalls in das Meßprotokoll des Koordinatenmeßgeräts als Zusatzinformation zu den Ergebnissen der Makro-Geometrieprüfung mit übernommen werden. Es besteht jedoch keine exakte räumliche Zuordnung der Meßstellen für die Oberflächenmessungen zum Koordinatensystem des Koordinatenmeßgerätes bzw. des darauf vermessenen Werkstücks.

Es ist die Aufgabe der vorliegenden Erfindung ein Koordinatenmeßgerät zu schaffen, mit dem auf möglichst einfache Weise neben Koordinaten- und Formmessungen auch Rauheitsmessungen an Werkstückoberflächen durchgeführt werden können, sowie ein geeignetes Meß- bzw. Prüfverfahren für die Rauheitsmessung mit einem solchen Gerät anzugeben.

Diese Aufgabe wird mit Hilfe der in den Ansprüchen 1 bzw. 8 angegebenen Maßnahmen gelöst.

Gemäß der Erfindung werden die geometrischen Abweichungen eines Werkstücks und die Rauheit der Werkstückoberfläche mit Hilfe ein und desselben Tastsystems, nämlich des messenden Tastkopfs am Koordinatenmeßgerät unter Benutzung der darin für die drei Meßachsen x, y und z vorgesehenen Meßwertgeber ermittelt. Ein separates Tastschnittgerät ist deshalb nicht mehr erforderlich und Wechselvorgänge, die ein Auftrennen von elektrischen Signal- oder Versorgungsleitungen zur Folge haben, entfallen. Zudem kann das zu prüfende Werkstück bei einheitlicher rechnerischer Werkstückausrichtung und im Werkstück- Koordinatensystem auch bezüglich seiner Oberflächeneigenschaften vermessen werden.

Da der für die Koordinatenmessungen verwendete messende Tastkopf Meßwertgeber für alle drei Raumrichtungen besitzt, ist es nicht erforderlich, den Tastkopf zu drehen oder die zu prüfende Werkstückoberfläche parallel zu den Führungen x, y und z des KMG auszurichten, denn die Mehrachsensteuerung eines KMG erlaubt auch ein raumschräges Verfahren des Tastkopfs bzw. des Taststiftträgers. Statt dessen kann wie in der Koordinatenmessung üblich eine bezüglich der Lage der zu prüfenden Fläche ausgerichtete Tastspitze mit Hilfe der Tasterwechseleinrichtung des Tastkopfs automatisch eingewechselt werden und die Tastschnitte können beliebig im Werkstück-Koordinatensystem durchgeführt werden. Gemäß der Erfindung können somit erstmals mit nur einem Tastsystem oberflächenbeschaffenheitsabhängige Funktionen (z.B. Formschluß-, Kraftschlußanforderungen, Gleit-, Reib- und Dichteigenschaften) von Funktionsflächen am Werkstück im Zusammenhang mit und in Abhängigkeit von anderen makrogeometrischen Funktionen und Eigenschaften untersucht und beurteilt werden. Beispielsweise lassen sich so Dichtflächen jetzt in einer Aufspannung bezüglich Lage, Form und bezüglich ihrer Oberflächeneigenschaft (Rauheit) prüfen.

Eine separate Auswerteelektronik wie für ein eingewechseltes Tastschnittgerät ist nicht erforderlich, da für die Signalverarbeitung und Meßwertverarbeitung auf die bereits vorhandenen Funktionen von Tastkopfelektronik, Steuerung und Rechner des Koordinatenmeßgerätes zurückgegriffen werden kann.

Es ist somit lediglich erforderlich, anstelle der bei Koordinatenmessungen einzuwechselnden starren Taststifte mit Tastkugel eine für Rauheitsmessungen üblicherweise verwendete Tastspitze mit einem Spitzenradius von z.B. 2 bis 5 Mikrometer als starres passives Element einzuwechseln. Als aktives Meßsystem dient jedoch das übliche, im Tastkopf vorhandene Tastermeßsystem, wie es in der klassischen Koordinatenmeßtechnik verwendet wird. Das Signal dieses Meßsystems wird über einen Analog-Digitalwandler einer digitalen Signalverarbeitungseinrichtung zugeführt, die auch sonst bei der Meßwerterfassung, z.B. bei der Formprüfung mit dem Scanning-Verfahren die Meßwerte generiert.

Eine separate Vorschubeinheit für das Tastschnittgerät ist ebenfalls nicht erforderlich. Vielmehr kann der Antastformkörper für die Rauheitsmessungen, d.h. die Diamantspitze von den Antrieben der Meßschlitten des KMG über die zu vermessende Werkstückoberfläche bewegt werden. Besonders vorteilhaft ist es jedoch, die in den eingangs zum Stand der Technik genannten messenden Tastköpfen bereits vorhandenen Kraftgeneratoren für die Vorauslenkung des Taststiftträgers als Vorschubeinheit für die Rauheitsmessung auszunutzen. Die Tastspitze wird dann bei Stillstand der Meßschlitten des KMG über die zu prüfende Werkstückoberfläche geführt. In beiden Fällen ist es zweckmäßig, Abweichungen der Führungen entweder der Meßschlitten des KMG oder der Führungen des auslenkbaren Taststiftträgers rechnerisch zu korrigieren, um eine Ebene bzw. Gerade mit sehr geringen Abweichungen von der Idealgestalt als Referenz für die Rauheitsmessung zur Verfügung zu haben.

Weitere Vorteile der Erfindung ergeben sich aus der nachfolgenden Beschreibung eines Ausführungsbeispiels anhand der Figuren 1 - 4 der beigefügten Zeichnungen.
- Figur 1: ist eine perspektivische Prinzipskizze, die den mechanischen Aufbau eines messenden Tastkopfs für ein Koordinatenmeßgerät zeigt;
- Figur 2a: ist eine vereinfachte Prinzipskizze, die den Taststiftträger (10) aus Figur 1 mit einem über die Wechseleinrichtung am Taststiftträger befestigten Taststift mit Tastkugel für die Koordinatenmessung bzw. Geometrieprüfung zeigt;
- Figur 2b: ist eine vereinfachte Prinzipskizze, die den Taststiftträger (10) aus Figur 1 mit einem über die Wechseleinrichtung am Taststiftträger befestigten Taststift mit Spitze für die Rauheitsmessung am Werkstück zeigt;
- Figur 3a: sind Blockschaltbilder mit den wesentlichen für
- u. 3b: die Steuerung bzw. Meßwertgewinnung verwendeten Komponenten der Elektronik bzw. Software eines für Rauheitsmessungen geeigneten Koordinatenmeßgerätes;
- Figur 4: ist ein Diagramm, das die bei einer Rauheitsmessung an einem Rauheitsnormal gewonnenen Meßwerte zeigt.

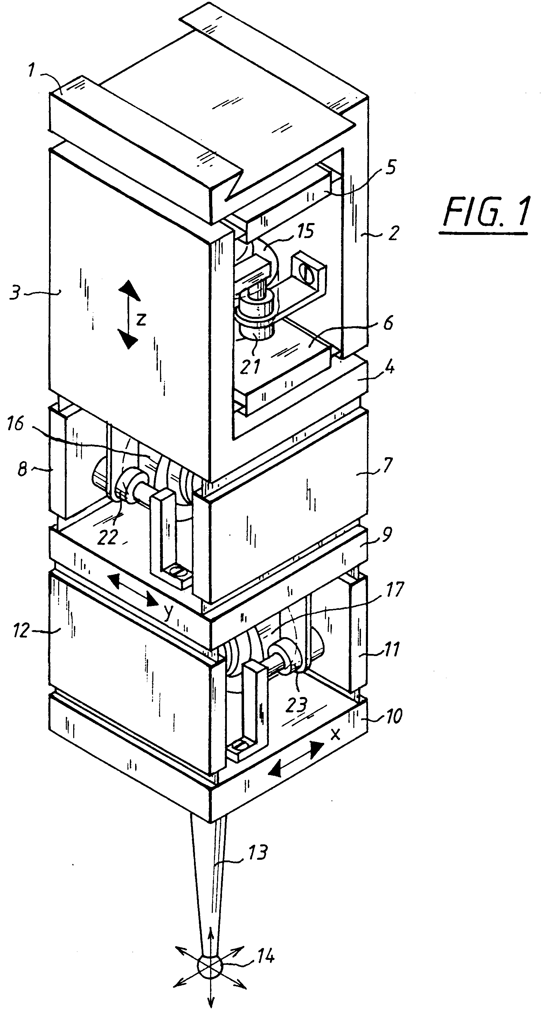

Der in Figur 1 dargestellte Tastkopf besitzt ein gehäusefestes Teil in Form eines Winkels, dessen oberer waagerechter Schenkel (1) eine Aufnahmeschwalbe zur Befestigung des Tastkopfs an der Pinole des nicht näher dargestellten Koordinatenmeßgerätes aufweist. Mit dem vertikalen Schenkel (2) des gehäusefesten Teils ist über ein Paar beabstandete und in der Mitte verstärkte Federbleche (5) und (6) der vertikale Teil (3) eines weiteren L-förmigen Winkels verbunden. Die hieraus resultierende Parallelogrammführung bildet die z-Führung des Tastkopfes.

Am waagerechten Teil (4) des in z beweglichen Winkels ist über ein zweites Paar verstärkter Federbleche (7) und (8) eine Platte (9) beweglich aufgehängt. Hierdurch wird die y-Führung des Tastkopfes gebildet. An dieser wiederum hängt ein um 90° gegenüber den Federblechen (7) und (8) gedrehtes drittes Paar Federbleche (11) und (12), das die Platte (9) mit einer weiteren Platte (10) verbindet, und die x-Führung des Tastkopfs darstellt. Die Platte (10) trägt den Taststift (13) mit der Tastkugel (14).

Jede der drei Parallelogrammführungen ist mit einem Meßkraftgenerator nach Art eines Tauchspulenantriebes versehen. Hierzu ist am feststehenden Teil (2) der erste Magnet (15), an der Unterseite des Schenkels (4) der zweite Magnet (16) und an der Platte (9) der dritte Magnet (17) des betreffenden Tauchspulenantriebs befestigt, während die beweglichen Teile, d.h. die Spulenkörper der Tauchspulenantriebe mit den auslenkbaren Teilen (3,9 und 10) der z, y und x-Führung verbunden sind.

Ebenfalls dargestellt sind die drei Meßsysteme (21,22 und 23), mit denen die Auslenkung der geführten Teile des Tastkopfes in den drei genannten Koordinatenrichtungen laufend ermittelt wird. Hierbei handelt es sich um sogenannte LVDT-Systeme, das sind im wesentlichen bei einer Trägerfrequenz betriebene Induktionsspulen, die ein der Stellung des darin verschiebbaren Kerns proportionales Wegsignal abgeben.

Koordinatenmeßgeräte mit dem vorstehend beschriebenen Tastkopf werden beispielsweise unter der Bezeichnung PRISMO und UPMC Carat von der Anmelderin angeboten.

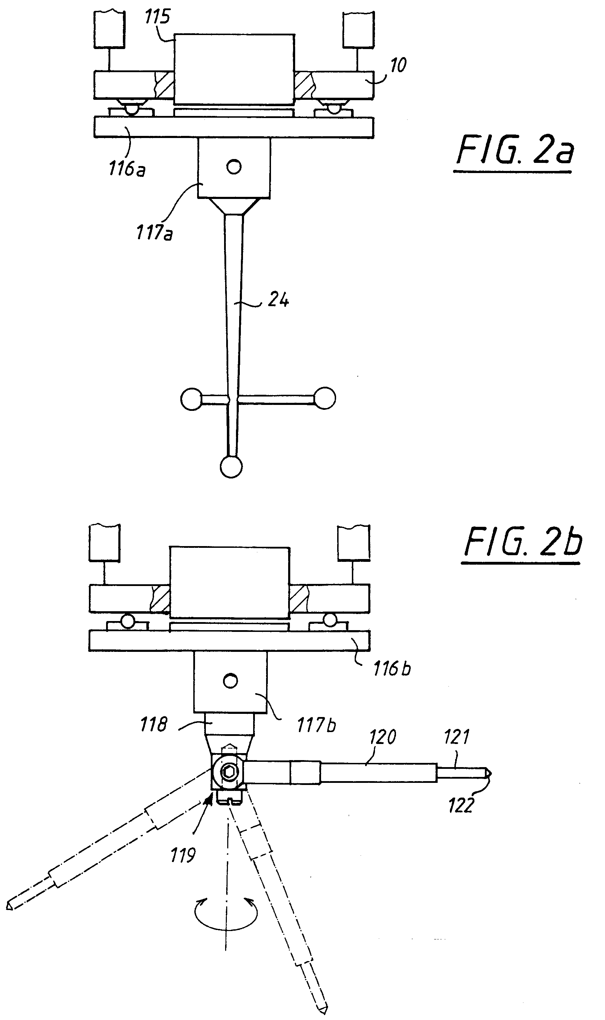

Für Maß-, Lage- und Formprüfungen am Werkstück kann der in Figur 1 mit (13) bezeichnete Taststift mit der Tastkugel (14) beispielsweise mit Hilfe der in der US-PS 4 688 307 beschriebenen Tasterwechseleinrichtung auch gegen Taststifte anderer Geometrie, beispielsweise den in Figur 2a gezeigten Sterntaster (24) ausgewechselt werden. Hierzu befindet sich an der Unterseite der Platte (10) des Tastkopfs ein aus drei Kugelpaaren gebildetes Dreipunktlager, gegen das der Wechselmagnet (15) die mit drei entsprechenden Walzen in die Kugelpaare eingreifende Adapterplatte (116a) mit dem daran befestigten Sterntaster (24) zieht.

Für Rauheitsmessungen am Werkstück wird nun anstelle des Taststifts (13) bzw. des Sterntasters (24) ein für diese Zwecke speziell angefertigter Stift eingewechselt. Dieser Stift (121) trägt eine Diamantspitze (122) mit einem Spitzenradius von r = 2 - 5 µm. Der Winkel der Tastspitze beträgt 60°. Natürlich können auch stattdessen Stifte mit anderen Diamantspitzen, die beispielsweise einen Spitzenwinkel von 75° oder 90° aufweisen und/oder andere für die Rauheitsmessung geeignete Spitzenradien besitzen, verwendet werden. Der Stift (121) ist über ein Verlängerungsstück (120) an ein Gelenk (119) angesetzt, das seinerseits mittels einer konischen Aufnahme (118) an den Adapterwürfel (117b) des Wechseltellers (116b) angesetzt ist.

Das Gelenk (119) erlaubt das Ausrichten der Tastspitze (122) durch Drehen und Schwenken in einem etwa halbkugelförmigen Bereich unterhalb des Tastkopfs, wie das durch die gestrichelt gezeichneten Stellungen angedeutet ist.

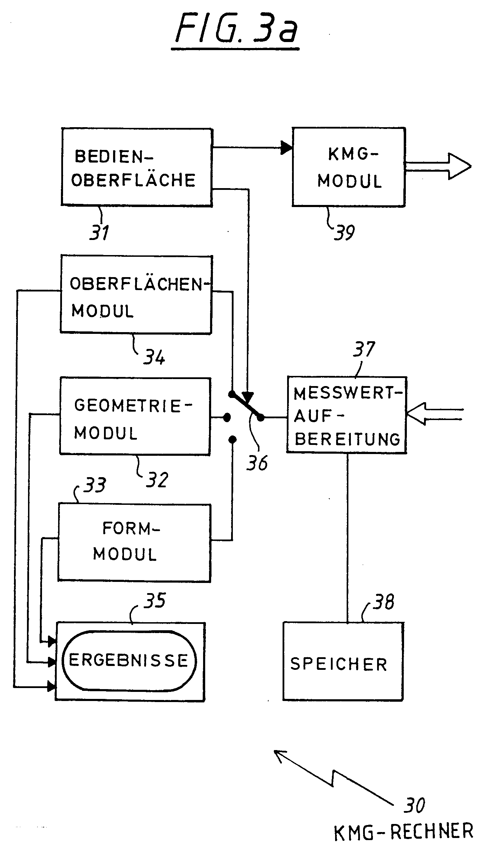

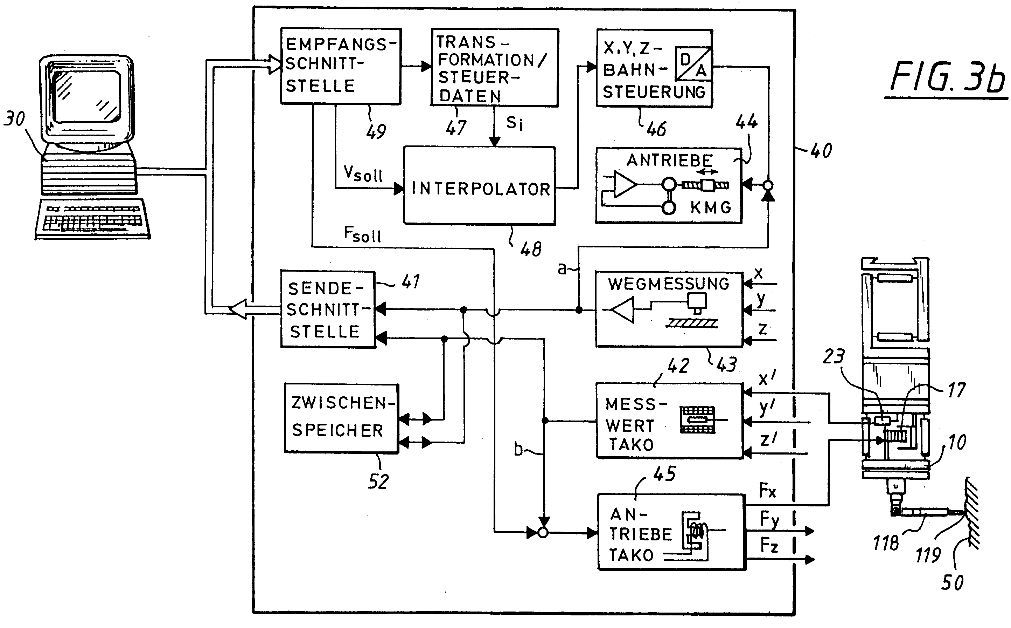

Nachfolgend wird anhand von Figur 3a und Figur 3b die Steuerung und Meßwerterfassung des mit dem vorstehend beschriebenen Tastkopf ausgerüsteten Koordinatenmeßgeräts bei Rauheitsmessungen beschrieben.

Mit (30) ist in Figur 3a der Rechner des KMG bezeichnet, der die Meßabläufe steuert und die vom Koordinatenmeßgerät erhaltenen Meßwerte aufbereitet und auswertet. Hierzu besitzt die für diesen Zweck eingesetzte Meßsoftware eine Bedienoberfläche (31), über die der Benutzer die für den Meßablauf erforderlichen Eingaben machen kann. Die Software enthält weiterhin das eigentliche KMG-Modul, das ist der Teil der Software, der die Eingaben des Benutzers in entsprechende Steuerbefehle umsetzt, die zur Bewegung der Meßschlitten des KMG mit vorgegebener Geschwindigkeit und Richtung nötig sind, die Tauchspulenantriebe (15,16 und 17) im Tastkopf mit dem nötigen Strom für die gewünschte Meßkraft beaufschlagen etc..

Weiterhin enthält die Software drei verschiedene Auswerte-Module nämlich ein Modul (32) für Geometriemessungen, ein Modul (33) für Formmessungen sowie ein Modul (34) für Oberflächenmessungen wie Welligkeit und Rauheit. Die genannten drei Module werten die von der Steuerung des KMG erhaltenen Meßwerte des Tastkopfs und der Längenmeßsysteme in den verfahrbaren Achsen des KMG entsprechend der ausgewählten Meßaufgabe Geometriemessung oder Formmessung oder z.B. Rauheitsmessung aus. Dargestellt werden die ausgewerteten Ergebnisse dann auf einer Anzeigeeinheit (35) d.h. einem Monitor, Drucker oder Plotter.

Die Auswahl des für die Meßaufgabe erforderlichen Auswertemoduls nimmt der Bediener über die Bedienoberfläche (31) vor. Dies ist durch den Schalter (36) veranschaulicht.

Die genannten drei Auswertemodule der Software greifen auf die von der Steuerung des KMG erhaltenen und in einem Unterprogramm (37) aufbereiteten und danach in einem Speicher (38) abgelegten Meßwerte der Induktivtaster (21, 22 und 23) im Tastkopf des KMG sowie der Längenmeßsysteme in den verfahrbaren Achsen des Koordinatenmeßgerätes zurück. Dies wird nachstehend noch näher beschrieben.

Der Rechner (30) erhält die genannten Meßwerte von der in Figur 3b in Form von Funktionsblöcken dargestellten Steuerung (40) des Koordinatenmeßgerätes über eine Sendeschnittstelle (41). Generiert werden die Meßwerte (x', y' und z') die die Auslenkung des Taststiftträgers (10) beschreiben, in einem Funktionsblock (42) "Meßwert Tastkopf". Dort werden die analogen Ausgangssignale der drei Induktivmeßsysteme (21, 22 und 23) gefiltert, verstärkt und in Digitalsignale gewandelt, die im schnellstmöglichen internen Maschinentakt in einen Zwischenspeicher (52) eingelesen werden. In gleicher Weise sorgt der Funktionsblock (43) "Wegmessung" dafür, daß die sinusförmigen Ausgangssignale der inkrementalen Längenmeßsysteme des Koordinatenmeßgerätes in den drei Meßachsen (x, y und z) in an sich bekannter Weise interpoliert, gezählt und dann als digitale Koordinatenmeßwerte in den Zwischenspeicher (52) eingelesen werden. Der Inhalt des Zwischenspeichers (52) wird entweder komplett nach Abschluß eines Meßvorganges oder bereits während des noch laufenden Meßvorganges in Blöcken über die Sendeschnittstelle (41) dem Rechner (30) übergeben und dort ebenfalls gespeichert.

Gesteuert werden die Antriebe des KMG und damit die Position des Tastkopfs im Meßbereich des Gerätes mit Hilfe der Dreiachsen-Bahnsteuerung (46). Die Bahnsteuerung erhält die Positionsdaten von einem Interpolator (48), der die vom KMG-Modul (39) des Rechners (30) der Steuerung (40) über die Empfangsschnittstelle (49) übergebenen Geometriedaten nach deren Transformation in Steuerdaten ein Funktionsblock (47) entsprechend der gewählten Sollgeschwindigkeit V_{Soll} untersetzt.

Über die Empfangsschnittstelle (49) erhält auch das Steuermodul (45), das den Strom für die Tauchspulen der Meßkraftgeneratoren (15, 16 und 17) im Tastkopf generiert, die nötige Information über die in den einzelnen Koordinatenrichtungen einzustellenden Meßkräfte (Fₓ, F_{y}, F_{z}).

Mit (a) und (b) sind die Rückkopplungsleitungen bezeichnet, über die die Lageregelkreise der Antriebe der verfahrbaren Achsen des KMG bzw. der Tauchspulen im Tastkopf geschlossen werden.

Mit dem beschriebenen System können Formmessungen an Werkstücken durch Einwechseln des in Figur 2a dargestellten Sterntaster (24) beispielsweise so vorgenommen werden, wie das in der europäischen Patentanmeldung 0 569 694 A2 beschrieben ist, auf die an dieser Stelle ausdrücklich Bezug genommen wird. Zum Messen der Rauheit z.B. der Werkstückoberfläche (50) mit eingewechseltem Rauheitstaster (118-122) kann nach folgenden zwei Methoden vorgegangen werden:

### 1. Methode: Abfahren der Meßstrecke mit den Antrieben des KMG

Über die Bedienoberfläche (31) wird das Oberflächenmodul (34) der Meßsoftware angewählt. Dieses Modul fordert die Eingabe verschiedener Kenngrößen wie z.B. des für die Meßwertauswertung anzuwendenden digitalen Profilfilters (siehe DIN 4777), Länge und Lage der für die Rauheitsmessung ausgewählten Meßstrecke, Betrag und Richtung der Meßkraft (F_{Soll}) sowie die vorgegebene Fahrgeschwindigkeit (V_{Soll}), die bei Rauheitsmessungen üblicherweise zwischen 0,1 mm/s und 2 mm/s liegt.

Soweit die eingegebenen Daten für die Steuerung des KMG erforderlich sind, werden diese vom KMG-Modul (39) an die Empfangsschnittstelle (49) der Steuerung weitergegeben. Im wesentlichen handelt es sich hierbei um den Startpunkt der Messung, einen Richtungsvektor und die vorgegebene Geschwindigkeit und Meßkraft.

Anschließend fährt das KMG mit seinen Antrieben in den drei Achsen mit einer Antastgeschwindigkeit von ca. 1 mm/sec die Werkstückoberfläche (50) an, bis die Auslenkung der Meßwertgeber (21, 22 und 23) im Tastkopf den Kontakt der Diamantspitze (119) mit der Werkstückoberfläche (50) meldet. Nach Erreichen dieses Startpunkts folgt die Maschine mit der für die Rauheitsmessung eingestellten Geschwindigkeit von beispielsweise 0,5 mm/sec der vorgegebenen Meßstrecke von typisch 5,6 mm, wobei die Tauchspulenantriebe so geregelt werden, daß die Tastspitze (122) mit einer Antastkraft von typisch 0,05 N bis 0,1 N an der Oberfläche des Prüflings (40) anliegt. Die hierbei entsprechend der Oberflächenrauheit generierten Auslenkungen der Tastspitze (122) werden durch die Meßwertgeber (21, 22 und 23) gemessen und im schnellstmöglichen Maschinentakt digitalisiert und gemeinsam mit den von den Zählern der Wegmeßsysteme gelieferten Positionsmeßwerten im Zwischenspeicher (52) abgelegt.

Nachdem die Meßstrecke abgefahren ist, werden die Meßwerte aus dem Zwischenspeicher (52) über die Sendeschnittstelle (41) dem Softwaremodul (37) des Rechners (30) übergeben und dort ebenfalls komplett gesichert. Anschließend werden die gespeicherten Meßwerte mit Hilfe eines digitalen Profilfilters in ein Welligkeitsprofil und ein Rauheitsprofil der Werkstückoberfläche (50) gewandelt. Aus dem Rauheitsprofil werden dann die Rauheitskenngrößen z.B. Rₐ, R_{z} und Rₘₐₓ errechnet.

Bereits vor der eigentlichen Messung am Werkstück ist die Position der Tastspitze (122) im Koordinatensystem des KMG in einem Kalibriervorgang bestimmt worden, indem beispielsweise wie bei Koordinatenmessungen üblich ein Prüfkörper, beispielsweise eine Kalibrierkugel an verschiedenen Stellen angetastet wurde.

Messungen, die mit der vorstehend beschriebenen Einrichtung durchgeführt wurden, haben sehr gute Ergebnisse im Vergleich zu konventionellen Tastschnittgeräten ergeben. So waren die Abweichungen der Meßergebnisse für die Profilrauhtiefe (PRt), die jeweils an einem Hommel-Geometrienormal Rt 8,9 µm und einem Hommel-Geometrienormal Rt 92 µm gegenüber einem konventionellen Tastschnittgerät RTH Form talysurf 120L gemessen wurden, kleiner als 1%. Vergleichsmessungen an technischen Oberflächen ergaben Abweichungen zum konventionellen Tastschnittgerät von ebenfalls nur wenigen Prozent, d.h. in einem Bereich, der selbst bei Wiederholmessungen mit einem konventionellen Rauheitsmeßsystem an verschiedenen Meßorten zulässig sind.

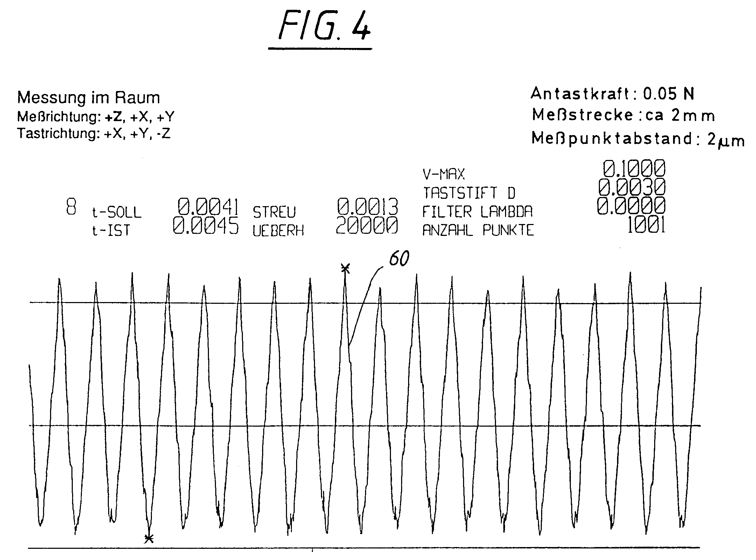

Figur 4 zeigt die Erfassung des Oberflächenprofils (60) an einem Rauheitsnormal Perthen PGN-3 mit R_{z} = 4,1 µm auf einem KMG des Typs UPMC 550 Carat der Anmelderin, das mit dem vorstehend beschriebenen messenden Tastkopf und den anhand von Figur 3 beschriebenen Komponenten ausgerüstet war. Dabei war der Rauheitstaststift (118) frei im Raum orientiert (ca. 45° in zwei Ebenen geneigt) und die Tastrichtung erfolgte etwa in Richtung der Flächennormale des raumschräg positionierten Rauheitsnormals. Das Meßergebnis t-Ist von 0,0047 mm für die Rauhtiefe liegt selbst ohne Filterung im Bereich des Sollwerts von 0,0041 mm wenn man die spezifizierte Antastunsicherheit K3 von 0,8 µm für den verwendeten messenden Tastkopf berücksichtigt.

### Zweite Methode: Abfahren der Meßstrecke bei stillgesetzten Antrieben des KMG

Dieses Verfahren läuft in Teilschritten gleich wie das vorstehend beschriebene Verfahren ab. Jedoch werden nach dem ersten Antasten der Werkstückoberfläche mit der Diamantspitze (122) die Antriebe der Meßschlitten des KMG stillgesetzt.

Anschließend wird parallel zur Normalenrichtung der zu prüfenden Werkstückoberfläche die für die Rauheitsmessung erforderliche Meßkraft von ca. 0,05 N eingestellt und die Diamantspitze dann mit Hilfe der Meßkraftgeneratoren im Tastkopf entlang der vorgewählten Meßlinie, d.h. senkrecht zur Antastrichtung langsam mit 0,1 mm/sec über die Werkstückoberfläche bewegt. Die hierbei generierten Meßsignale der Induktivmeßsysteme (21-23) werden dann in gleicher Weise wie in der ersten Methode beschrieben verarbeitet. Da sich jedoch während dieser Bewegung die Pfeilhöhe ändert, da die Parallelogrammführungen nicht auf einer idealen Geraden führen, sind die über die Meßstrecke aufgenommenen Meßwerte mit einer kreisbogenförmigen Funktion gefaltet.

Bei Rauheitsmessungen nach der 2. Methode kann der beschriebene Einfluß der Abweichungen der Parallelogrammführung von einer idealen Geraden mittels Profilfilter im Zuge der Meßwertauswertung im Oberflächenmodul (34) eliminiert werden. Der Einfluß auf die Profilgestalt (Welligkeit) kann eliminiert werden, indem die Abweichungen der Parallelogrammführung von einer idealen Geraden anschließend im Rechner (30) von den im Speicher (38) abgelegten Meßwerten subtrahiert werden. Diese Korrektur wird von dem Modul (37) "Meßwertaufbereitung" im Rechner (30) durchgeführt.

Bei den anhand von Figur 3 beschriebenen Funktionsblöcken der Steuerung (40) muß es sich nicht unbedingt um diskrete elektronische Bauelemente handeln. Sie können ebenso als Funktionsblöcke in der Firmware eines entsprechend programmierten Mikroprozessors verstanden werden, der den wesentlichen Bestandteil der Steuerung des KMG darstellt.

Als Oberflächenmodul (34) in der Software des Rechners (30) kann im Prinzip auch eine entsprechend angepaßte Auswertesoftware eingesetzt werden, wie sie für konventionelle Tastschnittgeräte angeboten wird.

## Patentansprüche

1. Verfahren zur Messung der Rauheit an Werkstücken mit einem Koordinatenmeßgerät (KMG), wobei
- an den für die Koordinatenmessung an Werkstücken (50) vorgesehenen Tastkopf des KMG anstelle des Koordinatenmeßtasters (13, 24) ein passiver Taster (118-121) angesetzt wird, dessen Antastformkörper (122) eine für Rauheitsmessungen geeignete Spitze ist,
- die Oberfläche des Werkstücks (50) mit dem Antastformkörper (122) bei geringer vom Tastkopf auf das Werkstück (40) ausgeübter Kraft (Fx, Fy, Fz) abgetastet wird,
- die während der Abtastung von den Signalgebern (21, 22, 23) im Tastkopf abgegebenen Meßsignale (x', y', z') weiterverarbeitet und als digitale Meßpunktfolgen (60) gespeichert werden,
- aus den gespeicherten Meßpunktfolgen, Rauheitskenngrößen (z.B. Rₐ, R_{z}, Rₘₐₓ) der Werkstückoberfläche ermittelt werden.

2. Verfahren nach Anspruch 1, wobei der Antastformkörper (122) für Rauheitsmessungen von den Antrieben (44) der Meßschlitten des KMG über die zu vermessende Werkstückoberfläche (50) bewegt wird.

3. Verfahren nach Anspruch 1, wobei der Tastkopf Kraftgeneratoren (15, 16, 17) für die Auslenkung des Tasters (13, 24, 118-122) in mehreren Koordinatenrichtungen besitzt und der Antastformkörper (122) für Rauheitsmessungen bei Stillstand der Meßschlitten des KMG von den Kraftgeneratoren (15-17) über die zu vermessende Werkstückoberfläche (50) bewegt wird.

4. Verfahren nach einem der Ansprüche 1 - 3, wobei die Werkstückoberfläche (50) raumschräg in Bezug auf die Führungen (x, y, z) der Meßschlitten des KMG abgetastet wird.

5. Verfahren nach einem der Ansprüche 1 - 4, wobei Abweichungen der Führungen des KMG bzw. der Führungen (2/3, 7/8, 11/12) im Tastkopf von einer idealen Ebene bzw. Geraden rechnerisch korrigiert werden.

6. Verfahren nach Anspruch 1, wobei das erfaßte Oberflächenprofil als quasianaloge Meßpunktfolge (60) generiert wird.

7. Verfahren nach einem der Ansprüche 1 - 6, wobei die gespeicherte Meßpunktfolge (60) einer digitalen Filterung unterzogen wird.

8. Koordinatenmeßgerät (KMG) zur Bestimmung der geometrischen Abmessungen von Werkstücken mit einer zusätzlichen Einrichtung für die Rauheitsmessung an der Werkstückoberfläche, wobei
- der zur Bestimmung der geometrischen Abmessungen eingesetzte Tastkopf des KMG ein messender Tastkopf ist, der Meßwertgeber (21-23) enthält, die den Auslenkungen des Taststifts (13, 24, 118-122) in den verschiedenen Koordinatenrichtungen (x', y', z') proportionale Meßsignale abgeben,
- der Tastkopf ein Antasten mit unterschiedlichen Meßkräften (Fₓ, F_{y}, F_{z}) erlaubt,
- zusätzlich zu den für die Koordinatenmessungen am Tastkopf befestigbaren Antastformkörpern (14) mindestens ein weiterer Taster (118-122) mit einer für Rauheitsmessungen geeigneten Ausformung des Antastformkörpers (122) vorgesehen ist, der an der Tasterhalterung (10) am Tastkopf befestigbar ist,
- die an die Meßwertgeber (21, 22, 23) im Tastkopf angeschlossene Signalverarbeitungselektronik (42) mit einem Speicher (52, 38) gekoppelt ist, in dem die aus den Meßsignalen des Tastkopfs gewonnene Meßpunktfolge (60) speicherbar ist,
- dem Rechner (30) des KMG eine Auswertesoftware (34) zugeordnet ist, die aus den gespeicherten Meßpunktfolgen die Rauheitskenngrößen (z.B. Rₐ, R_{z}, Rₘₐₓ) der Werkstückoberfläche berechnet.

9. Koordinatenmeßgerät nach Anspruch 8, wobei als Referenz für die Rauheitsmessung die Führungen der Meßschlitten des KMG dienen.

10. Koordinatenmeßgerät nach Anspruch 8, wobei als Referenz für die Rauheitsmessung die Führungen (2/3, 7/8, 11/12) der auslenkbaren Tasterhalterung (10) im Tastkopf des KMG dienen.

11. Koordinatenmeßgerät nach Anspruch 8, wobei als Referenz für die Rauheitsmessungen die tatsächliche Verfahrbahn des Tastkopfs des KMG dient.

12. Koordinatenmeßgerät nach einem-der Ansprüche 9 - 11, gekennzeichnet durch eine Einrichtung (37) zur Korrektur der Führungsabweichungen von einer ideal ebenen Fläche bzw. geraden Linie.

13. Koordinatenmeßgerät nach einem der Ansprüche 8 - 12, wobei die auf dem Rechner (30) des KMG geladene Software mehrere Auswertemodule (32, 33, 34) umfaßt zur wahlweisen Auswertung der vom Tastkopf gelieferten Meßwerte (x', y', z') als Makro-Geometriedaten (Maß, Form, Lage) oder Oberflächendaten (Rauheit, Welligkeit) sowie ein Modul (39) zur Einstellung der für die Meßwertgewinnung erforderlichen Parameter (Meßstrecke, Meßrichtung, Meßkraft, Abtastgeschwindigkeit, Tastertyp etc.).

14. Koordinatenmeßgerät nach einem der Ansprüche 8 - 13, wobei der Antastformkörper (Tastspitze 122) für die Rauheitsmessung eine freie Tastspitze ohne Kufe ist.

15. Verfahren nach einem der Ansprüche 1 - 7, wobei die Position des Antastformkörpers (Tastspitze 122) für Rauheitsmessungen im Koordinatensystem des KMG an einem Kalibrierkörper bestimmt wird.
